(19) Europäisches Patentamt
European Patent Office
Office européen des brevets

(11) Veröffentlichungsnummer: **0 276 213**
**B1**

(12) **EUROPÄISCHE PATENTSCHRIFT**

(45) Veröffentlichungstag der Patentschrift: **01.08.90**

(51) Int. Cl.$^5$: **C 08 F 220/12,** C 09 D 133/08

(21) Anmeldenummer: **86905274.6**

(22) Anmeldetag: **23.08.86**

(86) Internationale Anmeldenummer:
**PCT/EP86/00495**

(87) Internationale Veröffentlichungsnummer:
**WO 87/02042 09.04.87 Gazette 87/08**

# (54) LÖSLICHES, VERNETZBARES ACRYLATCOPOLYMERISAT, VERFAHREN ZU SEINER HERSTELLUNG UND ÜBERZUGSMITTEL AUF DER BASIS DES ACRYLATCOPOLYMERISATS.

(30) Priorität: **30.09.85 DE 3534874**

(43) Veröffentlichungstag der Anmeldung:
**03.08.88 Patentblatt 88/31**

(45) Bekanntmachung des Hinweises auf die Patenterteilung:
**01.08.90 Patentblatt 90/31**

(84) Benannte Vertragsstaaten:
**AT BE CH DE FR GB IT LI NL SE**

(56) Entgegenhaltungen:
**EP-A-0 103 199**
**FR-A-1 224 066**
**FR-A-1 521 776**

(73) Patentinhaber: **BASF Lacke + Farben Aktiengesellschaft**
**Max-Winkelmann-Strasse 80**
**D-4400 Münster (DE)**

(72) Erfinder: **JUNG, Werner**
**Uhrwerkerstrasse 65**
**D-4715 Ascheberg (DE)**
Erfinder: **SIEVERS, Axel**
**Tulpenweg 55-57**
**D-4400 Münster (DE)**

**EP 0 276 213 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein lösliches, vorvernetetes Acrylatcopolymerisat, erhätlich durch Copolymerisation von Monomeren mit mindestens zwei polymerisierbaren, olefinisch ungesättigten Doppelbindungen, Monomeren mit mindestens einer vernetzbaren Gruppe und weiteren polymerisierbaren Monomeren.

Aus der gattungsbildenden EP—A—103 199 ist ein Acrylatcopolymerisat bekannt, welches erhalten worden ist durch Copolymerisation von 10 bis 95 Gewichts-% t-Butylacrylat, 0,1 bis 3 Gewichts-% polyfunktioneller Monomerer, wie beispielsweise Trimethylolpropantriacrylat, 1 bis 30 Gewichts-% Comonomerer mit einer funktionellen vernetzbaren Gruppe und 0 bis 80 Gewichts-% weiterer polymerisierbarer, ethylenisch ungesättigter Monomerer. Als Comonomere mit einer funktionellen vernetzbaren Gruppe werden carboxylgruppenhaltige und hydroxylgruppenhaltige Monomere genannt. Gemäß den Beispielen der EP—A—103 199 wird bei einem Festkörpergehalt von etwa 75 gew.-% polymerisiert. Die verzweigte Acrylatcopolymerisate werden mit Polyepoxiden oder veretherten Amino-Formaldehyd-Harzen vernetzt. Die Vorteile der Überzugszusammensetzungen gemäß der EP—A—103 199 bestehen darin, daß die daraus erhaltenen Überzüge eine gute Feuchtigkeitsbeständigkeit aufweisen, und daß die Überzugszusammensetzungen einen hohen Festkörpergehalt aufweisen können.

Die Aufgabe der vorliegenden Erfindung bestand darin, die Eigenschaften der Überzugsmittel bzw. der Überzuge auf der Basis von Acrylatcopolymerisaten zu verbessern in Hinsicht der Beständigkeit gegenüber langfristiger Belastung durch Chemikalien, Lösungsmittel, in Hinsicht auf die Benzinfestigkeit, die Elastizität der auf Basis der Überzugsmittel erhaltenen Überzüge, der Korrosionsbeutändigkeit und in Hinsicht der Beständigkeit gegenüber langfristiger Belastung durch Wasser bzw. Wasserdampf. Die Zusammensetzungen sollen gegebenenfalls bei Raumtemperatur oder bei leicht erhöhter Temperatur aushärten und damit beispielsweise in der Autoreparaturlackierung einsetzbar sein. Weiterhin soll unter anderem aus wirtschaftlichen Gründen ein hoher Festkörpergehalt der härtbaren Überzugsmittel bei relativ geringer Viskosität erreichbar sein. Diese Aufgabe wird überraschenderweise durch ein lösliches Acrylatcopolymerisat gelöst, welches einen höheren Anteil an einpolymerisierten, mehrfach ethylenisch ungesättigten Monomeren aufweist als die in der EP—A—103 199 beschriebenen Acrylatharze. Im Vergleich zu linearen Acrylatharzen und den Acrylatharzen gemäß der EP—A—103 199 kann bei den erfindungsgemäßen Acrylatcopolymerisaten eine niedrigere Viskosität bei relativ hohem Festkörpergehalt erzielt werden. Erst durch die erfindungsgemäßen Reaktionsbedingungen während der Copolymerisation lassen sich Anteile ab 5 Gewichts-% an mehrfach ungesättigten Monomeren in das Acrylatharz einbauen. Durch die stark verzweigte Struktur des Copolymerisats werden die funktionellen Gruppen des Harzes reaktiver, was einen großen Vorteil mit sich bringt.

Die der Erfindung zugrundeliegende Aufgabe wird durch das eingangs genannte löslicher vorvernetete Acrylatcopolymerisat gelöst, das dadurch gekennzeichnet ist, daß zu seiner Herstellung

a1) 5 bis 30 Gewichts-% Monomere mit mindestens zwei polymerisierbaren, olefinisch ungesättigten Doppelbindungen

a2) 5 bis 50 Gewichts%, bevorzugt 10 bis 35 Gewichts-%, Monomer mit einer vernetzbaren Gruppe außer Hydroxyl- und Carboxyl gruppen und

a3) mindestens 20 Gewichts-% weitere Monomere mit einer polymerisierbaren, olefinsch ungesättigten Doppelbindung,

wobei die Summe von a1, a2 und a3 100 Gewichts-% beträgt, in einem organischen Lösungsmittel bei 80 bis 130°C, vorzugsweise 90 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitatoren copolymerisiert werden und die Copolymerisation zur Herstellung des Acrylatcopolymerisats so durchgeführt wird, daß eine Lösung des Polymerisats mit einem Festkörpergehalt von 40 bis 65 Gew.-% resultiert.

Bei den Monomeren der Komponente a2 handelt es sich um in der Literatur bekannte Comonomere mit einer beliebigen, vernetzbaren funktionellen Gruppe außer Hydroxyl- und Carboxylgruppen. Aus der US—PS 4,401,794 ist ein Polymer bekannt, welches erhalten worden ist aus Isocyanatoalkylestern einer ungesättigten Carbonsäure und anderen polymerisierbaren Monomeren. Dieses Isocyanatgruppen enthaltende Polymer wird mit Wasser gehärtet. Aus der EP—B—20 000 sind Polymere aus Monomeren mit aktivierten Estergruppen, beispielsweise Methylacrylatamidoglykolat, bekannt. Als Vernetzer für diese Polymere eignen sich Verbindungen mit mindestens zwei primären oder sekundären Aminogruppen pro Molekül. Die Härtung kann bei Temperaturen um Raumtemperatur bis etwa 200°C durchgeführt werden. Aus der DE—AS 20 64 916 ist ein Verfahren zur Herstellung von hitzehärtbaren Pulvern bekannt, wobsi das Pulver aus einem epoxidgruppenhaltigen Mischpolymerisat und einer vernetzbaren Verbindung mit Carboxyl- oder Aminogruppen besteht.

Erfindungsgemäß können als Komponente a1 Verbindungen der allgemeinen Formel

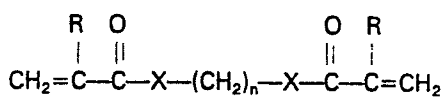

in der bedeuten

R=H oder $CH_3$,

X=O, NR′, S mit R′=H, Alkyl, Aryl

n=2 bis 8

verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Selbstverständlich können auch Kombinationen dieser mehrfach ungesättigten Monomeren verwendet werden. Weiterhin ist Divinylbenzol geeignet als Komponente a1. Weiterhin kann die Komponente a1 vorteilhaft ein Umsetzungsprodukt aus einer Carbonsäure mit einer polymerisierbaren, olefinisch ungesättigten Doppelbindung und Glycidylacrylat und/oder Glycidylmethacrylat oder eine mit einem ungesättigten Alkohol veresterte Polycarbonsäure oder ungesättigten Monocarbonsäure sein.

Ferner kann vorteilhaft als Komponente a1 ein Umsetzungsprodukt eines Polyisocyanats und eines ungesättigten Alkohols oder Amins verwendet werden. Als Beispiel hierfür sie das Reaktionsprodukt aus einem Mol Hexamethylendiisocyanat und 2 Mol Allylalkohol genannt.

Eine weitere vorteilhafte Komponente a1 ist ein Diester von Polyethylenglykol und/oder Polypropylenglykol mit einem mittleren Molekulargewicht von weniger als 1500, vorzugsweise von weniger als 1000 und Acrylsäure und/oder Methacrylsäure.

Die weiteren polymerisierbaren Monomeren der Komponente a3 können vorteilhafterweise ausgewählt sein aus der Gruppe Styrol, Vinyltoluol, Alkylester der Acrylsäure und Methacrylsäure, Alkoxyethylacrylate und Aryloxyethylacrylate und der entsprechenden Methacrylate, Ester der Malein- und Fumarsäure. Als Beispiele seien genannt Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5,-Trimethylhexylmethacrylat, Decylmethacrylat, Dodecylmethacrylat, Hexadecylmethacrylat, Octadecylmethacrylat, Butoxyethylacrylat, Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylinitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen. Die Auswahl der Komponente a3 richtet sich weitgehend nach den gewünschten Eigenschaften des Acrylatcopolymerisats in bezug auf Elastizität, Härte, Verträglichkeit und Polarität. Diese Eigenschaften lassen sich zum Teil mit Hilfe der bekannten Glasübergangstemperaturen der Monomeren steuern.

Vorteilhafterweise kommen als Monomeren der Komponente a2 Isocyanatgruppen enthaltende Monomere in Frage. Besonders bevorzugt sind hierbei Isocyanatoalkylester ungesättigter Carbonsäuren, die der allgemeinen Formel

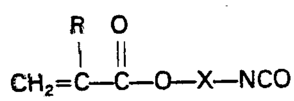

entsprechen, in der bedeuten:

R=H, $CH_3$, $C_2H_5$

X=$-(CH_2)_{1-12}$

Als Beispiele seien Isocyanatoethylacrylat und Isocyanatoethylmethacrylat genannt. Weitere geeignete Isocycyanatgruppen enthaltende Monomere sind zum Beispiel Vinylisocyanat und 1:1 Umsetzungsprodukte von Diisocyanaten mit Monomeren mit aktivem Wasserstoff. Als Beispiel hierfür sei das 1:1 Umsetzungsprodukt aus Isophorondiisocyanat mit einem hydroxylgruppenhaltigen Monomeren genannt.

Die Monomeren der Komponente a2 können besonders bevorzugt aktivierte Estergruppen enthaltende Monomere sein, die der folgenden allgemeinen Formel entsprechen:

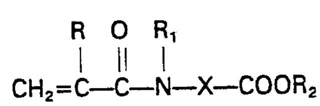

mit

R=H, Methyl

$R_1$=H, Alkyl, Aryl

$R_2$=Alkyl

X=

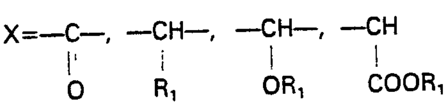

Als besonders bevorzugt ist hierbei Methylacrylamidoglykolatmethylether zu nennen. Weitere aktivierte Estergruppen tragende Monomere sind Methylacrylamidoglykolat und Methylmethacryloxiacetat.

Die Monomeren der Komponente a2 können auch Alkoxymethylacrylamide oder Alkoxymethylmethacrylamide der allgemeinen Formel

$$CH_2{=}\overset{R_1}{\overset{|}{C}}-\overset{O}{\overset{\|}{C}}-NR-CH_2-O-R_2,$$

wobei

$R_1$=H oder Methyl bedeutet,
$R_2$=H oder Alkyl
R=H, Alkyl, Aryl

Werden in das erfindungsgemäße lösliche Acrylatcopolymerisat Monomere mit einer aktivierten Estergruppe oder Alkoxymethylacrylamide bzw. Alkoxymethylmethacrylamide einpolymerisiert, so können als weitere Monomere mit einer polymerisierbaren, olefinisch ungesättigten Doppelbindung bis zu 10 Gewichts-%, bezogen auf das Gesamtgewicht aller Monomerer, hydroxylgruppenhaltige Monomere und/oder bis zu 5 Gewichts-%, bezogen auf das Gesamtgewicht aller Monomerer, carboxylgruppenhaltige Monomere in das Acrylatcopolymerisat einpolymerisiert werden.

Als Monomere mit einer zur Vernetzung befähigten Gruppe seien Monomere genannt, welche Glycidylgruppen enthalten. Die Glycidylgruppen enthaltenden Monomeren der Komponente a2 sind vorzugsweise Glycidylester ungesättigter Carbonsäuren oder Glycidylether von ungesättigten Verbindungen. Als Beispiele seien genannt: Glycidylacrylat, Glycidylmethacrylat, Glycidylester der Malein- und Fumarsäure, Glycidylvinylphthalat, Glycidylallylphathalat, Glycidylallylmalonat.

Die Erfindung betrifft auch Verfahren zur Herstellung der erfindungsgemäßen löslichen Acrylatcopolymerisate, die dadurch gekennzeichnet sind, daß zur Herstellung der Acrylatcopolymerisate

a1) 5 bis 30 Gewichts-% Monomere mit mindestens zwei polymerisierbaren, olefinisch ungesättigten Doppelbindungen

a2) 5 bis 50 Gewichts-%, bezvorzugt 10 bis 35 Gewichts-%, Monomere mit einer vernetzbaren Gruppe außer Hydroxyl- und Carboxylgruppen und

a3) mindestens 20 Gewichts-% weitere Monomere mit einer polymerisierbaren, olefinisch ungesättigten Doppelbindung,

wobei die Summe von a1, a2 und a3 100 Gewichts-% beträgt, in einem organischen Lösungsmittel bei 80 bis 130°C, vorzugsweise bei 90 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden und die Polymerisation zur Herstellung der Acrylatcopolymerisate so durchgeführt wird, daß eine Lösung der Polymerisate mit einem Festkörpergehalt von 40 bis 65 Gew.-% resultiert. Durch die efindungsgemäßen Polymerisationsbedingungen läßt sich überraschenderweise eine klare, transparente, nicht gelierte Lösung eines verzweigten Copolymerisats herstellen. Durch den Verwendung von Monomeren mit mindestens zwei ethylenisch ungesättigten Gruppen wird eine Vorvernetzung der Copolymerisatmoleküle hervorgerufen, die aufgrund der erfindungsgemäßen speziellen Reaktionsbedingungen trotzdem nicht zu gelierten Produkten führt.

Vorteilhafterweise werden als Polymerisationsregler Mercaptogruppen enthaltende Verbindungen verwendet. Dabei ist darauf zu achten, daß bei Herstellung eines Acrylatcopolymerisats mit Isocyanatgruppen als Regler Mercaptoverbindungen mit tertiären SH-Gruppen, wie beispeisweise t-Dodecylmercaptan, verwendet werden. Verwendet man bei der Herstellung eines Acrylatcopolymerisats mit aktivierten Estergruppen Mercaptoethanol als Regler, so sollte die Polymerisationstemperatur 80—90°C möglichst nicht überschreiten.

Weiterhin ist es notwendig, Initiatoren bei der Polymerisation einzusetzen. Hierbei eignen sich insbesondere Peroxiester und/oder Azoverbindungen. Die Auswahl des Initiators richtet sich nach dem Anteil der eingesetzten mehrfach ethylenisch ungesättigten Monomeren. Bei niedrigem Anteil kann man die für solche Temperaturen üblichen Initiatoren, wie zum Beispiel Peroxiester, verwenden. Bei höherem Anteil an mehrfach ethylenisch ungesättigten Monomeren werden vorzugsweise Azoverbindungen als Initiatoren eingesetzt.

Die Polymerisation zur Herstellung des löslichen Acrylatcopolymerisats wird so durchgeführt, daß eine Lösung des Polymerisats mit einem Festkörpergehalt von 40 bis 65 Gewichts-% resultiert. Nach der Polymerisation wird die Polymerisatlösung durch Abdestillieren von Lösungsmittel auf den gewünschten Festkörpergehalt konzentriert, vorzugsweise auf Festkörpergehalte von 60 Gewichts-%. Die so erhaltenen klaren Copolymerisatlösungen besitzen, auf einen Festkörpergehalt von 50 Gewichts-% eingestellt, eine Viskosität von 0,4 bis 10 dPa.s.

Die Erfindung betrifft auch Bindemittel, organische Lösungsmittel, gegebenenfalls Pigmente, Füllstoffe und übliche Hilfsstoffe und Additive enthaltende sowie gegebenenfalls durch Katalysatoren härtbare

Überzugsmittel, enthaltend als Bindemittel die zuvor beschriebenen löslichen, vernetzbaren Acrylatcopolymerisate und zur Vernetzung derselben geeignete Mittel.

Die Isocyanatgruppen enthaltenden Acrylatcopolymerisate können erfindungsgemäß mit einem Polyalkohol und/oder einem Polyamin vernetzt werden. Als geeignete Polyalkohole kommen alle Verbindungen mit mindestens zwei Hydroxylgruppen pro Molekül in Frage. Dabei sind einfache Diole und Polyole, wie Ethylenglykol, Propandiole, Butandiole, Glycerin, Trimethylolpropan, einsetzbar. Weitere geeignete Polyalkohole sind Polyesterpolyole und Polyacrylatpolyole. Geeignete Polyamine sind alle Verbindungen mit mindestens zwei vernetzenden Aminogruppen pro Molekül. Als Beispiele seien genannt Polyamidoamine, Di- und Polyamino-Alkyl- und Arylverbindungen, Diethylentriamin.

Die Erfindung betrifft auch Überzugsmittel, die dadurch gekennzeichnet sind, daß sie als Bindemittel lösliche Acrylatcopolymerisate, welche Monomere mit aktivierten Estergruppen sowie Alkoxymethylacrylamide oder Alkoxymethylmethacrylamide einpolymerisiert enthalten und Di- oder Polyamine, welche mindestens zwei primäre oder sekundäre Aminogruppen pro Molekül enthalten und/ oder einen Polyalkohol enthält.

Geeignete vernetzende Di- oder Polyamine sind beispielsweise 1,2-Ethylendiamin, 1,3-Popylendiamin, 1,2-Butylendiamin, 1,4-Butylendiamin, 1,6-Hexamethylendiamin, 1,7-Heptandiamin, Diethylentriamin, Xylyldiamin, 1,2-Diaminocyclohexan, 2,2-Bis(4-Aminocyclohexyl) propan und Bis(Hexamethylentriamin). Gut geeignet sind auch Umsetzungsprodukte aus 1 Mol Maleinsäuredialkylester mit 3 Mol Diamin.

Andere geeignete Di- oder Polyamine sind Polyamidharze, beispielsweise Kondensationsprodukte aus dimerisierten Fettsäuren und difunktionellen Aminen, wie beispielsweise Ethylendiamin. Weitere Aminogruppen enthaltende Polymere schließen Acrylatharze, Polyesterharze und Polyurethanharze ein.

Als geeignete Polyalkoholkomponente kommen alle Verbindungen mit mindestens zwei Hydroxylgruppen pro Molekül in Frage.

Die Erfindung betrifft auch ein Überzugsmittel, das dadurch gekennzeichnet ist, das es als Bindemittel das zuvor beschriebene lösliche Acrylatcopolymerisat mit Glycidylgruppen und Verbindungen mit mindestens zwei Carboxylgruppen oder mindestens zwei primären oder sekundären Aminogruppen oder mindestens zwei Hydroxylgruppen pro Molekül enthält.

Als Verbindungen mit mindestens zwei Carboxylgruppen pro Molekül kommen beispielsweise Acrylatharze in Frage, welche carboxylgruppenhaltige Monomere einpolymerisiert enthalten. Als Verbindungen mit mindestens zwei primären oder sekundären Aminogruppen pro Molekül eignen sich die bereits obengenannten Di- oder Polyamine. Als Verbindung mit mindestens zwei Hydroxygruppen pro Molekül kommen niedermolekulare Di- oder Polyole, Acrylatole oder Polyesterpolyole in Frage.

Die Erfindung betrifft auch ein Verfahren zur Herstellung der obengenannten Überzugsmittel, das dadurch gekennzeichnet ist, daß die zuvor beschriebenen löslichen vorvernetzten Acrylatcopolymerisate zusammen mit der Vernetzerkomponente sowie mit organischen Lösungsmitteln, gegebenenfalls Pigmenten und üblichen Hilfsstoffen und Additiven durch Mischen und gegebenenfalls durch Dispergieren zu einer Überzugsmasse verarbeitet wird. Unter der Vernetzerkomponente sind alle Verbindungen zu verstehen, die mindestens zwei funktionelle Gruppen enthalten, die zur Reaktion mit den vernetzbaren funktionellen Gruppen des löslichen Acrylatcopolymerisats befähigt sind.

Die Erfindungs betrifft auch Verfahren zur Herstellung eines Überzugs, bei denen die bereits obengenannten Überzugsmittel, wobei dem Überzugsmittel gegebenenfalls ein Katalysator zugemischt werden kann, durch Spritzen, Fluten, Tauchen, Walzen, Rakeln oder Streichen auf ein Substrat in Form eines Films aufgebracht wird und der Film zu einem festhaftenden Überzug gehärtet wird.

Die Erfindung betrifft auch die nach dem erfindungsgemäßen Verfahren beschichteten Substrate.

Die erfindungsgemäßen Überzüge weisen hervorragende Eigenschaften im bezug auf die Beständigkeit gegenüber Chemikalien, gegenüber Lösungsmitteln, gegenüber Wasser bzw. Wasserdampf auf. Sie zeigen gute Ergebnisse bei der Prüfung auf Benzinfestigkeit. Außerdem sind die Filme elastisch und korrosionsbeständig.

Nachfolgend wird die Erfindung anhand von Ausführungsbeispielen näher erläutert:

A) Herstellung erfindungsgemäßer Copolymerisate (Bindemittel A)

In den folgenden Beispielen beziehen sich, wenn nicht anders angegeben, alle Prozentangaben auf Gewichtsprozent, alle Angaben von Teilen auf Gewichtsteile. Die Festkörperwerte wurden in einem Umluftofen bestimmt nach 1 Stunde bei 130°C. Die Viskositäten wurden auf einem Kegel-Platte-Viskosimeter bestimmt.

A) Acrylatharz I

In einem 3 l-Edelstahlkessel werden vorgelegt

Vorlage:

185 Teile Butanol
274 Teile Toluol

Die Vorlage wird auf 80°C erhitzt, innerhalb 3 h wird gleichmäßig Zulauf 1 zudosiert:

Zulauf 1:

300 Teile Methacrylamidoglycolatmethylether
275 Teile Methylmethacrylat

250 Teile n-Butylacrylat
25 Teile Acrylsäure
150 Teile Hexandioldiacrylat
45 Teile Mercaptoethanol
200 Teile Butanol

Vor der Verwendung der Zulaufmischung 1 wird die Mischung vorsichtig auf 30°C erwärmt, ein geringer Anteil unlöslicher Nebenprodukte des Methacrylamidoglycolatmethylethers wird abfiltriert, als Zulauf 1 wird das klare Filtrat verwendet. Innerhalb 3,5 h wird Zulauf 2 zudosiert.

Zulauf 2:
36 Teile 2,2'-Azobis(2-methylbutyronitril)
60 Teile Butanol
84 Teile Toluol

Die Temperatur während der Polymerisation wird bei 80°C gehalten, nach Initiatorzulaufende wird 5 h bei 70°C nachpolymerisiert.

Die so erhaltene Acrylatharzlösung hat einen Festkörper von 49,2%, eine Säurezahl von 36,9 und eine Viskosität von 6,2 dPa.s (original).

Die Dispersität der Acrylatharzlösung beträgt laut Gelpermeationschromatographie 13,34.

Herstellung eines Polyaminvernetzers A

In einem 3 l Edelstahlkessel werden gemischt:

957 Teile Toluol
510 Teile Isophorondiamin

Die Mischung wird auf 75—80°C erwärmt, innerhalb 2,5 h werden bei dieser Temperatur

144 Teile Maleinsäuredimethylester

zudosiert. Danach wird der Kesselinhalt langsam innerhalb von 6 h auf 128°C erhitzt, wobei

1014 Teile einer Mischung aus Toluol und Methanol abdestillieren.

Zu dem Produkt werden weitere

450 Teile Toluol gegeben und erneut abdestilliert. Lösungsmittelreste werden unter Vakuum bei 80°C entfernt.

Das so erhaltene Produkt wird in

597 Teilen Ethanol

gelöst, die Vernetzerlösung hat einen Festkörper von 49,5%, eine Viskosität von 0,6 dPa.s (original) und ein Aminäquivalentgewicht von 140±5.

Acrylharz II

In einem 3 l-Edelstahlkessel werden vorgelegt

Vorlage:
471,5 Teile Xylol
943 Teile 1-Methoxipropylacetat-2

Die Vorlage wird auf 110°C erwärmt, innerhalb von 3 h wird gleichmäßig zudosiert:

Zulauf 1
225 Teile Methylmethacrylat
375 Teile Glycidylmethacrylat
300 Teile Styrol
300 Teile n-Butylacrylat
225 Teile Hexandioldiacrylat
75 Teile Butylmethacrylat
67,5 Teile Mercaptoethanol

Innerhalb von 3,5 h wird Zulauf 2 zudosiert; beide Zuläufe werden gleichzeitig gestartet.

Zulauf 2:
51 Teile 2,2' Azobis(2-methylbutyronitril)
136 Teile 1-Methoxipropylacetat-2
68 Teile Xylol

Während des Zulaufs wird die Temperatur bei 110°±1° gehalten. Nach Ende von Zulauf 2 wird 3 h bei 110°C nachpolymerisiert. Die so erhaltene, klare farblose Acrylatharzlösung hat einen Festkörper von 49,2% (2 h 100°C). eine Viskosität von 2,3 dPa.s (original) und ein Epoxidäquivalentgewicht von 615.

B) Herstellung und Prüfung von Lacken mit den erfindungsgemäßen Copolymerisaten

Beispiel 1
Folgende Komponenten werden miteinander vermischt

35,7 Teile Acrylharz I
11,9 Teile Vernetzer A
0,3 Teile 2-Hydroxypyridin
18,0 Teile n-Butanol

Von der Mischung werden Filme von 200 µm auf Glastafeln aufgerakelt und bei Raumtemperatur trocknen lassen.
Nach 5 d Trocknung bei Raumtemperatur wurde gefunden:

| | |
|---|---|
| Pendelhärte | 130" |
| Benzintest (5') | keine Erweichung, keine Markierung |
| Dobbelhübe mit Methylethylketon | 200 |

Beispiel 2
Folgende Komponenten wurden gemischt:

25,4 Teile Acrylatharzlösung II
8,2 Teile Vernetzer A
1,0 Teile n-Butanol
1,4 Teile 2-Ethylhexanol

Von der Mischung wurden Filme von 200 µm auf Glastafeln aufgerakelt und 20' bei 130°C eingebrannt.

| | |
|---|---|
| Pendelhärte nach Ofen | 119" |
| Benzintest (5') | keine Erweichung sehr leichte Markierung (nach 10 min reversibel) |

Beispiel 3
Die Pigmentpaste wird nach folgender Rezeptur 40 min. auf einer Laborsandmühle dispergiert.

Paste A

| | |
|---|---|
| Acrylharz II | 50,0 |
| Titandioxid-Rutil-Pigment | 40,0 |
| Schichtsilikat | 0,5 |
| Xylol | 4,5 |
| Methoxypropylacetat | 5,0 |

Nach folgender Rezeptur wird ein Decklack angesetzt, mittels Rakel auf Glasplatten aufgezogen (Trockenschichtstärke 40 µm), bei Raumtemperatur oder forciert 30 Minuten bei 60°C getrocknet, 1 Tag bei Raumtemperatur gelagert und dann geprüft.

| | |
|---|---|
| Paste A | 60,0 |
| Acrylatharz II | 30,0 |
| Xylol | 4,0 |
| Methoxipropylacetat | 4,0 |
| Siliconöllösung | 2,0 |
| Umsetzungsprodukt von 1 Mol Maleinsäuredimethylester mit 3 Mol Isophorondiamin | 18,7 |

Ergebnisse:

| | | |
|---|---|---|
| Trocknung: | 30 min 60°C | Raumtemper. |
| Schichtstärke: | 40 µm | 40 µm |
| Pendelhärte 1 Tag | 53 sec. | 25 sec. |
| Beständigkeit gegen Benzin nach 1 Tag | leichte Markierung | leichte Markierung |

**Patentansprüche**

1. Lösliches, vorvernetztes Acrylatcopolymerisat, erhältlich durch Copolymerisation von Monomeren mit mindestens 2 polymerisierbaren, olefinisch ungesättigten Doppelbindungen, Monomeren mit mindestens einer vernetzbaren Gruppe und weiteren polymerisierbaren Monomeren, dadurch gekennzeichnet, daß zu seiner Herstellung

a1) 5—30 Gew.-% Monomere mit mindestens 2 polymerisieıbaren, olefinisch ungesättigten Doppelbindungen,

a2) 5 bis 50 Gew.-%, bevorzugt 10 bis 35 Gew.-%, Monomere mit einer vernetzbaren Gruppe außer Hydroxyl- und Carboxylgruppen und

a3) mindestens 20 Gew.-% weitere Monomere mit einer polymerisierbaren, olefinisch ungesättigten Doppelbindung,

wobei die Summe von a1), a2) und a3) 100 Gew.-% beträgt, in einem organischen Lösungsmittel bei 80 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren copolymerisiert werden und die Copolymerisation zur Herstellung des Acrylatcopolymerisats so durchgeführt wird, daß eine Lösung des Polymerisats mit einem Festkörpergehalt von 40 bis 65 Gew.-% resultiert.

2. Lösliches, vorvernetztes Acrylatcopolymerisat nach Anspruch 1, dadurch gekennzeichnet, daß die Komponente a1) der allgemeinen Formel

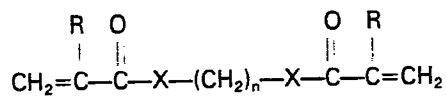

entspricht, in der bedeuten:

R=H oder $CH_3$,

X=O, NR', S mit R'=H, Alkyl, Aryl

n=2 bis 8.

3. Lösliches, vorvernetztes Acrylatcopolymerisat nach Anspruch 1, dadurch gekennzeichnet, daß die Komponente a1) ein Umsetzungsprodukt aus einer Carbonsäure mit einer polymerisierbaren, olefinisch ungesättigten Doppelbindung und Glycidylacrylat und/oder Glycidylmethacrylat ist.

4. Lösliches, vorvernetztes Acrylatcopolymerisat nach Anspruch 1, dadurch gekennzeichnet, daß die Komponente a1) eine mit einem ungesättigten, eine polymerisierbare Doppelbindung enthaltenden Alkohol veresterte Polycarbonsäure oder ungesättigte Monocarbonsäure ist.

5. Lösliches, vorvernetztes Acrylatcopolymerisat nach Anspruch 1, dadurch gekennzeichnet, daß die Komponente a1) durch Umsetzung eines Polyisocyanats mit ungesättigten, polymerisierbaren Doppelbindungen enthaltenden Alkoholen oder Aminen herstellbar ist.

6. Lösliches, vorvernetztes Acrylatcopolymerisat nach Anspruch 1, dadurch gekennzeichnet, daß die Komponente a1) ein Diester von Polyethylenglykol und/oder Polypropylenglykol mit einem mittleren Molekulargewicht von weniger als 1.500, bevorzugt weniger als 1.000, und Acrylsäure und/oder Methacrylsäure ist.

7. Lösliches, vorvernetztes Acrylatcopolymerisat nach Anspruch 1 bis 6, dadurch gekennzeichnet, daß die weiteren polymerisierbaren Monomeren der Komponente a3) ausgewählt sind aus der Gruppe Styrol, Vinyltoluol, Alkylester der Acrylsäure und Methacrylsäure, Alkoxyethylacrylate und Aryloxyethylacrylate und der entsprechenden Methacrylate, Ester der Malein- und Fumarsäure.

8. Lösliches, vorvernetztes Acrylatcopolymerisat nach einem oder nach mehreren der Ansprüche 1 bis 7, dadurch gekennzeichnet, daß die Monomeren der Komponente a2) Isocyanatgruppen enthalten.

9. Lösliches, vorvernetztes Acrylatcopolymerisat nach Anspruch 8, dadurch gekennzeichnet, daß die Monomeren der Komponente a2) Isocyanatoalkylester ungesättigter Carbonsäure sind, die der allgemeinen Formel

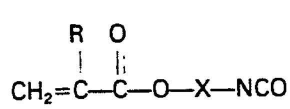

entsprechen, in der bedeuten:

$R=H, CH_3, C_2H_5$

$X=(CH_2)_n$ mit $n=1—12$

10. Lösliches, vorvernetztes Acrylatcopolymerisat nach einem oder nach mehreren der Ansprüche 1 bis 7, dadurch gekenneichnet, daß die Monomeren der Komponente a2) der folgenden allgemeinen Formel entsprechen:

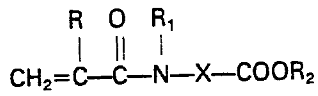

mit

R =H, Methyl

$R_1$=H, Alkyl, Aryl

$R_2$=Alkyl

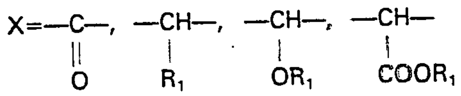

11. Lösliches, vorvernetztes Acrylatcopolymerisat nach Anspruch 10, dadurch gekennzeichnet, daß die Komponente a2) Methylacrylamidoglycolatmethylether ist.

12. Lösliches, vorvernetztes Acrylatcopolymerisat nach einem oder nach mehreren der Ansprüche 1 bis 7, dadurch gekennzeichnet, daß die Komponente a2) ein Alkoxymethylacrylamid oder ein Alkoxymethylmethacrylamid der allgemeinen Formel

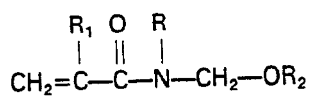

ist, wobei

$R_1$=H, Methyl

$R_2$=H, Alkyl

R =H, Alkyl, Aryl

bedeutet.

13. Lösliches, vorvernetztes Acrylatcopolymerisat nach Anspruch 10, 11 oder 12, dadurch gekennzeichnet, daß als Komponente a3) bis zu 10 Gew.-%, bezogen auf das Gesamtgewicht aller Monomeren, hydroxylgruppenhaltige Monomere und/oder bis zu 5 Gew.-%, bezogen auf das Gesamtgewicht aller Monomeren, carboxylgruppenhaltige Monomere in das Acrylatcopolymerisat einpolymerisiert sind.

14. Lösliches, vorvernetztes Acrylatcopolymerisat nach einem oder nach mehreren der Ansprüche 1 bis 7, dadurch gekennzeichnet, daß die Monomeren der Komponente a2) Glycidylgruppen enthalten.

15. Lösliches, vorvernetztes Acrylatcopolymerisat nach Anspruch 14, dadurch gekennzeichnet, daß die Glycidylgruppen enthaltenden Monomeren der Komponente a2) Glycidylester ungesättigter Carbonsäuren und/oder Glycidylether von ungesättigten Verbindungen sind.

16. Verfahren zur Herstellung des löslichen Acrylatcopolymerisats nach einem oder nach mehreren der Ansprüche 1 bis 15, dadurch gekennzeichnet, daß zu seiner Herstellung

a1) 5 bis 30 Gew.-% Monomere mit mindestens 2 polymerisierbaren, olefinisch ungesättigten Doppelbindungen,

a2) 5 bis 50 Gew.-%, bevorzugt 10 bis 35 Gew.-%, Monomere mit einer vernetzbaren Gruppe außer Hydroxyl- und Carboxylgruppen und

a3) mindestens 20 Gew.-% weitere Monomere mit einer polymerisierbaren, olefinisch ungesättigten Doppelbindung,

wobei die Summe der Komponenten a1), a2) und a3) 100 Gew.-% beträgt, in einem organischen Lösungsmittel bei 80 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden und die Polymerisation zur Herstellung des Acrylatcopolymerisats so durchgeführt wird, daß eine Lösung des Polymerisats mit einem Festkörpergehalt von 40 bis 65 Gew.-% resultiert.

17. Verfahren nach Anspruch 16, dadurch gekennzeichnet, daß als Polymerisationsregler Mercaptogruppen enthaltende Verbindungen verwendet werden.

18. Verfahren nach Anspruch 16 oder 17, dadurch gekennzeichnet, daß als Initiatoren Peroxyester und/oder Azoverbindungen verwendet werden.

19. Bindemittel, organisches Lösungsmittel, ggf. Pigmente, Füllstoffe und übliche Hilfsstoffe und

Additive enthaltendes sowie ggf. durch einen Katalysator härtbares Überzugsmittel, enthaltend als Bindemittel des lösliche, vorvernetzte Acrylatcopolymerisat nach einem oder nach mehreren der Ansprüche 1 bis 15 und ein zur Vernetzung derselben geeignetes Mittel.

20. Überzugsmittel nach Anspruch 19, dadurch gekennzeichnet, daß es als Bindemittel

A) das lösliche, vorvernetzte Acrylatcopolymerisat nach Anspruch 8 oder 9 und

B) einen Polyalkohol und/oder ein Polyamin mit mindestens 2 primären oder sekundären Aminogruppen enthält.

21. Überzugsmittel nach Anspruch 19, dadurch gekennzeichnet, daß es als Bindemittel

A) das lösliche, vorvernetzte Acrylatcopolymerisat nach Anspruch 10, 11, 12 oder 13 und

B) ein Di- oder Polyamin mit mindestens 2 primären oder sekundären Aminogruppen und/oder einen Polyalkohol enthält.

22. Überzugsmittel nach Anspruch 19, dadurch gekennzeichnet, daß es als Bindemittel

A) das lösliche, vorvernetzte Acrylatcopolymerisat nach Anspruch 14 oder 15 und

B) Verbindungen mit mindestens 2 Carboxylgruppen oder mindestens 2 primären oder sekundären Aminogruppen oder mindestens 2 Hydroxylgruppen pro Molekül enthält.

23. Verfahren zur Herstellung des Überzugsmittels nach Anspruch 20, dadurch gekennzeichnet, daß das lösliche, vorvernetzte Acrylatcopolymerisat mit der Polyalkoholkomponente und/oder der Polyaminkomponente sowie mit organischen Lösungsmitteln, ggf. Pigmenten, Füllfstoffen und üblichen Hilfsstoffen und Additiven durch Mischen und ggf. durch Dispergieren zu einer Überzugsmasse verarbeitet wird.

24. Verfahren zur Herstellung des Überzugsmittels nach Anspruch 21, dadurch gekennzeichnet, daß das lösliche Acrylatcopolymerisat nach Anspruch 10, 11, 12 oder 13 mit dem Di- oder Polyamin und/oder der Polyalkoholkomponente sowie mit organischen Lösungsmitteln, ggf. Pigmenten, Füllstoffen und üblichen Hilfsstoffen und Additiven durch Mischen und ggf. durch Dispergieren zu einer Überzugsmasse verarbeitet wird.

25. Verfahren zur Herstellung des Überzugsmittels nach Anspruch 22, dadurch gekennzeichnet, daß das lösliche, vorvernetzte Acrylatcopolymerisat nach Anspruch 14 oder 15 mit Verbindungen mit mindestens 2 Carboxylgruppen oder mindestens 2 primären oder sekundären Aminogruppen oder mindestens 2 Hydroxylgruppen pro Molekül sowie mit organischen Lösungsmitteln, ggf. Pigmenten, Füllstoffen und üblichen Hilfsstoffen und Additiven durch Mischen und ggf. Dispergieren zu einer Überzugsmasse verarbeitet wird.

26. Verfahren zur Herstellung eines Überzuges, bei dem ein Überzugsmittel nach Anspruch 20, 21 oder 22, wobei dem Überzugsmittel ggf. ein Katalysator zugemischt werden kann, durch Spritzen, Fluten, Tauchen, Walzen, Rakeln oder Streichen auf ein Substrat in Form eines Films aufgebracht wird und der Film zu einem fest haftenden Überzug gehärtet wird.

27. Beschichtetes Substrat, erhalten durch das Verfahren nach Anspruch 26.

**Revendications**

1. Copolymère d'acrylate, pré-réticulé, soluble, que l'on peut obtenir par copolymérisation de monomères ayant au moins 2 doubles liaisons d'insaturation oléfinique, polymérisables, de monomères ayant au moins un groupe réticulable, et d'autres monomères polymérisables, caractérisé par le fait que, pour sa préparation,

(a1) 5—30% en poids de monomères ayant au moins 2 doubles liaisons d'insaturation oléfinique, polymérisables,

(a2) 5 à 50% en poids, de préférence, 10 à 35% en poids, de monomères ayant un groupe réticulable en dehors de groupes hydroxyle et carboxyle, et

(a3) au moins 20% en poids d'autres monomères ayant une double liaison d'insaturation oléfinique, polymérisable,

la somme de (a1), (a2) et (a3) s'élevant à 100% en poids, sont copolymérisés dans un solvant organique, à une température de 80 à 130°C, de préférence, à une température de 90 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, et la copolymérisation, en vue de la préparation du copolymère d'acrylate, est conduite de telle sorte qu'il en résulte une solution du polymère ayant une teneur en corps solides de 40 à 65% en poids.

2. Copolymère d'acrylate, pré-réticulé, soluble, selon la revendication 1, caractérisé par le fait que le composant (a1) correspond à la formule générale:

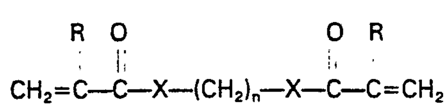

dans laquelle:

$R=H$ ou $CH_3$,

$X=O$, NR', S, avec R'=H, alkyle, aryle,

n=2 à 8.

3. Copolymère d'acrylate, pré-réticulé, soluble, selon la revendication 1, caractérisé par le fait que le composant (a1) est un produit de réaction d'un acide carboxylique ayant une double liaison d'insaturation oléfinique, polymérisable et de l'acrylate de glycidyle et/ou du méthacrylate de glycidyle.

4. Copolymère d'acrylate, pré-réticulé, soluble, selon la revendication 1, caractérisé par le fait que le composant (a1) est un acide polycarboxylique ou un acide monocarboxylique insaturé, estérifié par un alcool insaturé, contenant une double liaison polymérisable.

5. Copolymère d'acrylate, pré-réticulé, soluble, selon la revendication 1, caractérisé par le fait que le composant (a1) peut être préparé par réaction d'un polyisocyanate avec des alcools ou amines insaturés, contenant des doubles liaisons polymérisables.

6. Copolymère d'acrylate, pré-réticulé, soluble, selon la revendication 1, caractérisé par le fait que le composant (a1) est un diester de polyéthylèneglycol et/ou de polypropylèneglycol, ayant une masse moléculaire moyenne de moins de 1500, de préférence, de moins de 1000, et d'acide acrylique et/ou d'acide méthacrylique.

7. Copolymère d'acrylate, pré-réticulé, soluble, selon l'une des revendications 1 à 6, caractérisé par le fait que les autres monomères polymérisables du composant (a3) sont choisis dans le groupe constitué par le styrène, le vinyltoluène, les esters alkyliques de l'acide acrylique et de l'acide méthacrylique, les acrylates d'alcoxyéthyle et les acrylates d'aryloxyéthyle et les méthacrylates correspondants, les esters de l'acide maléique et de l'acide fumarique.

8. Copolymère d'acrylate, pré-réticulé, soluble, selon l'une ou selon plusieurs des revendications 1 à 7, caractérisé par le fait que les monomères du composant (a2) contiennent des groupes isocyanate.

9. Copolymère d'acrylate, pré-réticulé, soluble, selon la revendication 8, caractérisé par le fait que les monomères du composant (a2) sont des esters isocyanatoalkyliques d'acides carboxyliques insaturés, qui correspondent à la formule générale:

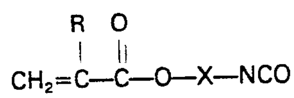

dans laquelle:

$R=H$, $CH_3$, $C_2H_5$

$X=(CH_2)_n$, avec n=1—12.

10. Copolymère d'acrylate, pré-réticulé, soluble, selon l'une ou selon plusieurs des revendications 1 à 7, caractérisé par le fait que les monomères du composant (a2) correspondent à la formule générale suivante:

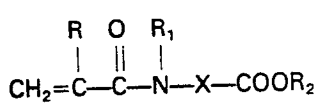

avec:

R=H, méthyle

$R_1$=H, alkyle, aryle

$R_2$=alkyle

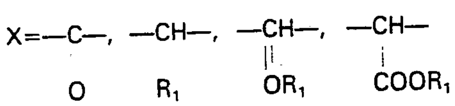

11. Copolymère d'acrylate, pré-réticulé, soluble, selon la revendication 10, caractérisé par le fait que le composant (a2) est l'éther méthylique du méthylacrylamidoglycolate.

12. Copolymère d'acrylate, pré-réticulé, soluble, selon l'une ou selon plusieurs des revendications 1 à 7, caractérisé par le fait que le composant (a2) est un alcoxyméthylacrylamide ou un alcoxyméthylméthacrylamide de formule générale:

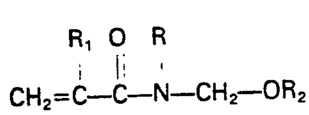

ou:

$R_1$=H, méthyle

$R_2$=H, alkyle

R=H, alkyle, aryle.

13. Copolymère d'acrylate, pré-réticulé, soluble, selon l'une des revendications 10, 11 ou 12, caractérisé par le fait que, comme composant (a3), jusqu'à 10% en poids, par rapport au poids total de tous les monomères, de monomères renfermant des groupes hydroxyle et/ou jusqu'à 5% en poids, par rapport au poids total de tous les monomères, de monomères renfermant des groupes carboxyle, sont incorporés par polymérisation dans le copolymère d'acrylate.

14. Copolymère d'acrylate, pré-réticulé, souble, selon l'une ou selon plusieurs des revendications 1 à 7, caractérisé par le fait que les monomères du composant (a2) contiennent des groupes glycidyle.

15. Copolymère d'acrylate, pré-réticulé, soluble, selon la revendication 14, caractérisé par le fait que les monomères contenant des groupes glycidyle du composant (a2) sont des esters glycidyliques d'acides carboxyliques insaturés et/ou des éthers glycidyliques de composés insaturés.

16. Procédé de préparation du copolymère d'acrylate soluble selon l'une ou selon plusieurs des revendications 1 à 15, caractérisé par le fait que, pour sa préparation, on copolymérise jusqu'à l'obtention d'un produit non-gélifié, pré-réticulé,

(a1) 5 à 30% en poids de monomères ayant au moins 2 doubles liaisons d'insaturation oléfinique, polymérisables,

(a2) 5 à 50% en poids, de préférence, 10 à 35% en poids, de monomères ayant une poids réticulable en dehors de groupes hydroxyle et carboxyle, et

(a3) au moins 20% en poids d'autres monomères ayant une double liaison d'insaturation oléfinique, polymérisable,

la somme des composants (a1), (a2) et (a3) s'élevant à 100% en poids,

dans un solvant organique, à une température de 80 à 130°C, de préférence, à une température de 90 à 120°C, avec utilisation d'au moins 0,5% en poids, de préférence, d'au moins 2,5% en poids, par rapport au poids total des monomères, d'un régulateur de polymérisation, et avec utilisation d'initiateurs de polymérisation, et on conduit la polymérisation en vue de la préparation du copolymère d'acrylate de telle sorte qu'il en résulte une solution du polymère ayant une teneur en corps solides de 40 à 65% en poids.

17. Procédé selon la revendication 16, caractérisé par le fait qu'on utilise, comme régulateur de polymérisation, des composés contenant des groupes mercapto.

18. Procédé selon l'une des revendications 16 ou 17, caractérisé par le fait qu'on utilise, comme initiateurs, des peroxyesters et/ou des composés azoïques.

19. Agent de revêtement contenant un liant, un solvant organique, le cas échéant, des pigments, des charges et les adjuvants et additifs usuels, de même que durcissable le cas échéant par un catalyseur, ledit agent contenant comme liant, le copolymère d'acrylate, préréticulé, soluble, selon l'une ou selon plusieurs des revendications 1 à 15 et un agent approprié pour la réticulation de celui-ci.

20. Agent de revêtement selon la revendication 19, caractérisé par le fait qu'il contient, comme liant:

(A) le copolymère d'acrylate, pré-réticulé, soluble, selon l'une des revendications 8 ou 9, et

(B) un polyol et/ou une polyamine ayant au moins 2 groupes amino primaires ou secondaires.

21. Agent de revêtement selon la revendication 19, caractérisé par le fait qu'il contient, comme liant:

(A) le copolymère d'acrylate, pré-réticulè, soluble, selon l'une des revendications 10, 11, 12 ou 13, et

(B) une di- ou polyamine ayant au moins 2 groupes amino primaires ou secondaires et/ou un polyol.

22. Agent de revêtement selon la revendication 19, caractérisé par le fait qu'il contient, comme liant:

(A) le copolymère d'acrylate, pré-réticule, soluble, selon l'une des revendications 14 ou 15, et

(B) des composés ayant au moins 2 groupes carboxyle ou au moins 2 amino primaires ou secondaires ou au moins 2 groupes hydroxyle par molécule.

23. Procédé de fabrication de l'agent de revêtement selon la revendication 20, caractérisé par le fait que l'on transforme en une masse de revêtement, par mélange et, le cas échéant, par dispersion, le copolymère d'acrylate, pré-réticulé, soluble, avec les composants polyol et/ou les composants polyamine, de même qu'avec des solvants organiques, le cas échéant, des pigments, des charges et les adjuvants et additifs usuels.

24. Procédé de fabrication de l'agent de revêtement selon la revendication 1, caractérisé par le fait que l'on transforme en une masse de revêtement, par mélange et, le cas échéant, par dispersion, le copolymère d'acrylate selon l'une des revendications 10, 11, 12 ou 13 avec la di- ou polyamine et/ou les composants polyol, de même qu'avec des solvants organiques, le cas échéant, des pigments, des charges et les adjuvants et additifs usuels.

25. Procédé de fabrication de l'agent de revêtement selon la revendication 22, caractérisé par le fait que l'on transforme en une masse de revêtement, par mélange et, le cas échéant, par dispersion, le copolymère d'acrylate, pré-réticulé, soluble, selon l'une des revendications 14 ou 15, avec des composés ayant au moins 2 groupes carboxyle ou au moins 2 groupes amino primaire ou secondaire ou au moins 2 groupes hydroxyle par molécule, de même qu'avec des solvants organiques, le cas échéant, des pigments, des charges et les adjuvants et additifs usuels.

26. Procédé de fabrication d'un revêtement, suivant lequel on applique sur un substrat un agent de revêtement selon l'une des revendications 20, 21 ou 22, un catalyseur pouvant, le cas échéant, être incorporé à l'agent de revêtement, par pulvérisation, coulée, immersion, laminage, raclage ou peinture, sous la forme d'un film, et on fait durcir le film en un revêtement adhérent.

27. Substrat revêtu, obtenu par le procédé selon la revendication 26.

## Claims

1. Soluble, pre-crosslinked acrylate copolymer, obtainable by copolymerization of monomers having at least 2 polymerizable, olefinically unsaturated double bonds, monomers having at least one crosslinkable group and further polymerizable monomers, characterized in that, in its preparation,

a1) from 5 to 30% by weight of monomers having at least 2 polymerizable, olefinically unsaturated double bonds,

a2) from 5 to 50% by weight, preferably from 10 to 35% by weight, of monomers having a crosslinkable group, with the exception of hydroxyl and carboxyl groups, and

a3) at least 20% by weight of further monomers having a polymerizable, olefinically unsaturated double bond, the sum of a1), a2), and a3), being 100% by weight, are copolymerized in an organic solvent at from 80 to 130°C, preferably from 90 to 120°C, using at least 0.5, preferably at least 2.5, % by weight, based on the total weight of the monomers, of a polymerization regulator and using polymerization initiators, ad the copolymerization for the preparation of the acrylate copolymer is carried out in such a way that a solution of the polymer, having a solids content of from 40 to 65% by weight, results.

2. Soluble, pre-crosslinked acrylate copolymer according to Claim 1, characterized in that component a1) corresponds to the general formula

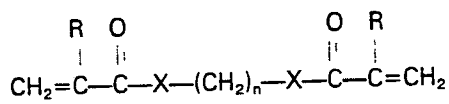

in which

R=H or $CH_3$,

X=O, NR', where R'=H, alkyl or aryl, or S, and

n=2 to 8.

3. Soluble, pre-crosslinked acrylate copolymer according to Claim 1, characterized in that component a1) is a reaction product of a carboxylic acid having a polymerizable, olefinically unsaturated double bond and glycidyl acrylate and/or glycidyl methacrylate.

4. Soluble, pre-crosslinked acrylate copolymer according to Claim 1, characterized in that component a1) is an unsaturated monocarboxylic acid or a polycarboxylic acid which is esterified with an unsaturated alcohol containing a polymerizable double bond.

5. Soluble, pre-crosslinked acrylate copolymer according to Claim 1, characterized in that component a1) can be prepared by reacting a polyisocyanate with amines or with alcohols containing unsaturated, polymerizable double bonds.

6. Soluble, pre-crosslinked acrylate copolymer according to Claim 1, characterized in that component a1) is a diester of polyethylene glycol and/or polypropylene glycol having a mean molecular weight of less than 1,500, preferably of less than 1,000, and acrylic acid and/or methacrylic acid.

7. Soluble, pre-crosslinked acrylate copolymer according to Claims 1 to 6, characterized in that the further polymerizable monomers of component a3) are selected from the group consisting of styrene, vinyltoluene, alkyl esters of acrylic acid and methacrylic acid, alkoxyethyl acrylates and aryloxyethyl acrylates and the corresponding methacrylates, and esters of maleic and fumaric acid.

8. Soluble, pre-crosslinked acrylate copolymer according to one or more of Claims 1 to 7, characterized in that the monomers of component a2) contain isocyanate groups.

9. Soluble, pre-crosslinked acrylate copolymer according to Claim 8, characterized in that the monomers of component a2) are isocyanatoalkyl esters of unsaturated carboxylic acids, which correspond to the general formula

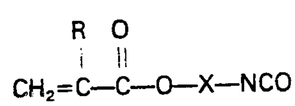

in which R denotes H, $CH_3$ or $C_2H_5$, and

X denotes $(CH_2)_n$, where n denotes 1 to 12.

10. Soluble, pre-crosslinked acrylate copolymer according to one or more of Claims 1 to 7, characterized in that the monomers of component a2) correspond to the following general formula:

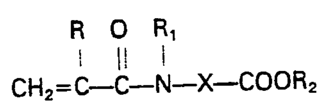

where

R=H or methyl,

$R_1$=H, alkyl or aryl,

$R_2$=alkyl, and

X= 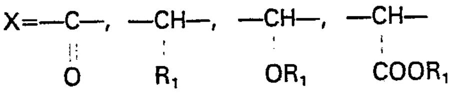

11. Soluble, pre-crosslinked acrylate copolymer according to Claim 10, characterized in that component a2) is methyl acrylamidoglycolate methyl ether.

12. Soluble, pre-crosslinked acrylate copolymer according to one or more of Claims 1 to 7, characterized in that component a2) is an alkoxymethylacrylamide or an alkoxymethylmethacrylamide of the general formula

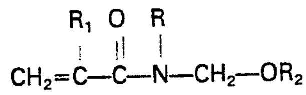

wherein

$R_1$ denotes H or methyl,
$R_2$ denotes H or alkyl, and
R denotes H, alkyl or aryl.

13. Soluble, pre-crosslinked acrylate copolymer according to Claim 10, 11 or 12, characterized in that up to 10% by weight, based on the total weight of all monomers, of hydroxyl-containing monomers and/or up to 5% by weight, based on the total weight of all monomers, of carboxyl-containing monomers are incorporated into the acrylate copolymer as copolymerized units of component a3).

14. Soluble, pre-crosslinked acrylate copolymer according to one or more of Claims 1 to 7, characterized in that the monomers of component a2) contain glycidyl groups.

15. Soluble, pre-crosslinked acrylate copolymer according to Claim 14, characterized in that the monomers of component a2) which contain glycidyl groups are glycidyl esters of unsaturated carboxylic acids and/or glycidyl ethers of unsaturated compounds.

16. Process for the preparation of the soluble acrylate copolymer according to one or more of Claims 1 to 15, characterized in that, in its preparation,

a1) from 5 to 30% by weight of monomers having at least 2 polymerizable, olefinically unsaturated double bonds,

a2) from 5 to 50% by weight, preferably from 10 to 35% by weight, of monomers having a crosslinkable group, with the exception of hydroxyl and carboxyl groups, and

a3) at least 20% by weight of further monomers having a polymerizable, olefinically unsaturated double bonds, the sum of components a1), a2), and a3), being 100% by weight, are co-polymerized in an organic solvent at from 80 to 130°C, preferably from 90 to 120°C, using at least 0.5% by weight, preferably at least 2.5% by weight, based on the total weight of the monomers, of a polymerization regulator and using polymerization initiators, to give a pre-crosslinked, non-gelled product and the polymerization for the preparation of the acrylate copolymer is carried out in such a way that a solution of the polymer, having a solids content of from 40 to 65% by weight, results.

17. Process according to Claim 16, characterized in that compounds containing mercapto groups are used as polymerization regulators.

18. Process according to Claim 16 or 17, characterized in that peroxy esters and/or azo compounds are used as initiators.

19. Coating agent which contains binders, an organic solvent, if appropriate pigments, fillers and conventional assistants and additives, and can be cured, if required, by a catalyst, the said coating agent containing, as the binder, the soluble, pre-crosslinked acrylate copolymer according to one or more of Claims 1 to 15, and an agent suitable for crosslinking this.

20. Coating agent according to Claim 19 characterized in that it contains, as the binder,

A) the soluble, pre-crosslinked acrylate copolymer according to Claim 8 or 9, and

B) a polyalcohol and/or a polyamine having at least 2 primary or secondary amino groups.

21. Coating agent according to Claim 19, characterized in that contains, as the binder,

A) the soluble, pre-crosslinked acrylate copolymer according to Claim 10, 11, 12 or 13, and

B) a di- or polyamine having at least 2 primary or secondary amino groups and/or a polyalcohol.

22. Coating agent according to Claim 19, characterized in that it contains, as the binder,

A) the soluble, pre-crosslinked acrylate copolymer according to Claim 14 or 15, and

B) compounds having at least 2 carboxyl groups or at least 2 primary or secondary amino groups or at least 2 hydroxyl groups per molecule.

23. Process for the preparation of the coating agent according to Claim 20, characterized in that the soluble, pre-crosslinked acrylate copolymer, together with the polyalcohol component and/or the polyamine component and with organic solvents, if appropriate pigments, fillers and conventional assistants and additives, is processed to give a coating material by mixing and, if appropriate by dispersing.

24. Process for the preparation of the coating agent according to Claim 21, characterized in that the soluble, acrylate copolymer according to Claim 10, 11, 12 or 13, together with the di- or polyamine and/or the polyalcohol component and with organic solvents, if appropriate pigments, fillers and conventional assistants and additives, is processed to give a coating material by mixing and, if appropriate, by dispersing.

25. Process for the preparation of the coating agent according to Claim 22, characterized in that the soluble, pre-crosslinked acrylate copolymer according to Claim 14 or 15, together with compounds having at least 2 carboxyl groups or at least 2 primary or secondary amino groups or at least 2 hydroxyl groups per molecule and with organic solvents, if appropriate pigments, fillers and conventional assistants and additives, is processed to give a coating material by mixing and, if appropriate, dispersing.

26. Process for the production of a coating, characterized in that a coating agent according to Claim 20, 21 or 22, with which coating agent a catalyst may be mixed, is applied onto a substrate in the form of a film by spraying, flow coating, dipping, roller coating, knife coating or painting, and the film is cured to give a firmly adhering coating.

27. Coating substrate obtained by the process according to Claim 26.